(19) Europäisches Patentamt / European Patent Office / Office européen des brevets

(11) **EP 2 753 733 B1**

(12) **EUROPEAN PATENT SPECIFICATION**

(45) Date of publication and mention
of the grant of the patent:
**26.04.2017 Bulletin 2017/17**

(21) Application number: **12758829.1**

(22) Date of filing: **07.09.2012**

(51) Int Cl.:
*C01B 32/158* (2017.01)     *C01B 32/159* (2017.01)
*C01B 32/168* (2017.01)     *C08K 5/14* (2006.01)
*D01D 5/12* (2006.01)       *H01B 1/04* (2006.01)
*D01F 9/12* (2006.01)       *C09K 5/14* (2006.01)
*D02G 3/02* (2006.01)

(86) International application number:
**PCT/EP2012/067478**

(87) International publication number:
**WO 2013/034672 (14.03.2013 Gazette 2013/11)**

(54) **CARBON NANOTUBES FIBER HAVING LOW RESISTIVITY, HIGH MODULUS AND/OR HIGH THERMAL CONDUCTIVITY AND A METHOD OF PREPARING SUCH FIBERS BY SPINNING USING A FIBER SPIN-DOPE**

KOHLENNANORÖHRCHENFASER MIT NIEDRIGER WIDERSTANDFÄHIGKEIT, HOHEM MODUL UND/ODER HOHER THERMALEN LEITFÄHIGKEIT UND EIN VERFAHREN ZUR HERSTELLUNG SOLCHER FASERN DURCH SPINNEN EINER SPINNLÖSUNG

FIBRE DE NANOTUBES DE CARBONE AYANT UNE FAIBLE RÉSISTIVITÉ, UN HAUT MODULE ET/OU UNE HAUTE CONDUCTIVITÉ THERMIQUE ET UNE MÉTHODE POUR PRÉPARER DE TELLES FIBRES PAR FILAGE EN UTILISANT UNE SOLUTION DE FILAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2011 EP 11180343**
**18.01.2012 EP 12151484**
**27.04.2012 US 201261639608 P**
**25.07.2012 EP 12177741**

(43) Date of publication of application:
**16.07.2014 Bulletin 2014/29**

(73) Proprietors:
• **Conyar B.V.**
**6662 HP Elst (NL)**
• **William Marsh Rice University**
**Houston, TX 77005 (US)**

(72) Inventors:
• **OTTO, Marcin, Jan**
**NL-6662 HP Elst (NL)**
• **JONG DE, Jorrit**
**NL-6815 HE Arnhem (NL)**
• **WAARBEEK TER, Ronald Folkert**
**NL-6904 ND Zevenaar (NL)**

• **HOOGERWERF, Ronald Edward**
**NL-6663 GA Lent (NL)**
• **MA, Anson**
**Hartford, CT 06103 (US)**
• **BEHABTU, Natnael**
**Wilmington, DE 19801 (US)**
• **TSENTALOVICH, Dmitri**
**Houston, TX 77027 (US)**
• **YOUNG, Colin**
**Houston, TX 77030 (US)**
• **PASQUALI, Matteo**
**Houston, TX 77005 (US)**

(74) Representative: **Heimann, Anette**
**CPW GmbH**
**Kasinostrasse 19-21**
**42103 Wuppertal (DE)**

(56) References cited:
**WO-A1-03/004740     WO-A1-2010/100941**
**JP-A- 2009 197 365     US-A1- 2011 017 957**
**US-B2- 7 125 502**

- **BEHABTU N ET AL: "Carbon nanotube-based neat fibers", 1 October 2008 (2008-10-01), NANO TODAY, ELSEVIER, AMSTERDAM, NL, PAGE(S) 24 - 34, XP025711583, ISSN: 1748-0132 [retrieved on 2008-10-01] the whole document**
- **DATABASE WPI Thomson Scientific, London, GB; AN 2010-K57073 XP002672691, & JP 2010 185163 A (JAPAN EXLAN CO LTD) 26 August 2010 (2010-08-26)**
- **J. HONE, M. WHITNEY, C. PISKOTI, A. ZETTL: "THERMAL CONDUCTIVITY OF SINGLE-WALLED CARBON NANOTUBES", PHYSICAL REVIEW B, vol. 59, no. 4, 15 January 1999 (1999-01-15), pages R2514-R2516, XP002692775, USA**
- **N. BEHABTU ET AL: "Strong, Light, Multifunctional Fibers of Carbon Nanotubes with Ultrahigh Conductivity", SCIENCE, vol. 339, no. 6116, 11 January 2013 (2013-01-11), pages 182-186, XP055054517, ISSN: 0036-8075, DOI: 10.1126/science.1228061**

**EP 2 753 733 B1**

**Description**

The invention pertains to carbon nanotubes fibers having low resistivity and/or high modulus and to composite articles comprising carbon nanotubes fibers having low resistivity and/or high modulus. The invention also pertains to a process for manufacturing carbon nanotubes fibers having low resistivity and/or high modulus.

State of the art methods to produce carbon nanotube fibers of low resistivity are based on dry processing. For example, Nanocomp Technologies use a process based on twisting carbon nanotube aerogels into fibers. Low resistivity is achieved by doping these fibers. Values of 50 $\mu\Omega$*cm have been achieved by doping. Production of carbon nanotubes fibers by dry processing is however very laborious and doping requires an additional processing step.

An alternative to dry processing of nanotubes is wet processing. US 7,125,502 B2 discloses fibers of single wall carbon nanotubes spun through dies having diameters of 500 $\mu$m, 250 $\mu$m and 125 $\mu$m. Drawing was not applied during spinning of the carbon nanotubes (CNT) fibers. Resistivity of the CNT fibers was 300 $\mu\Omega$*cm and higher.

WO 2009/058855 A2 discloses carbon nanotubes fibers spun through orifices having a diameter of 50 to 500 $\mu$m. CNT fibers having resistivity of 120 $\mu\Omega$*cm and higher have been produced by the method of WO2009/058855.

"Carbon nanotube-based neat fibers", Behabtu N et al, 1 October 2008, Nano Today, Elsevier Amsterdam pages 24-34, ISSN 1748-0132, discloses carbon nanotubes neat fibers having resistivity of 0.2 m$\Omega$*cm to 150 m$\Omega$*cm. This review paper further discloses carbon nanotubes neat fibers obtained by solution spinning having modulus up to 120 GPa.

WO 03/004740 A1 discloses carbon nanotubes fibers having resistivity at 200°K of 2.89 m$\Omega$*cm and 0.30 m$\Omega$*cm.

"Macroscopic, Neat, Single-Walled Carbon Nanotube Fibers", Lars M. Ericson et al, Science, Vol.305, pp.1447-1450, 3 September 2004, discloses discloses a solution-spun carbon nanotubes fiber having a Young's modulus of 120 GPa.

Fibers having low resistivity can advantageously be used in many applications such as for example light weight cables for electrical power transmission and for data transmission.

It is an object of the present invention to provide carbon nanotubes fibers having low resistivity and/or high modulus.

The spinning process according to the invention enables manufacturing of CNT fibers having resistivity below 120 $\mu\Omega$*cm, lower than state-of-the art wet spinning processes. In an embodiment, the resistivity of the CNT fibers is below 50 $\mu\Omega$*cm, which is lower than reported for nanotube fibers from any known production process. At the same time, the CNT fibers can have high modulus.

In an embodiment, the carbon nanotubes (CNT) fiber consists of at least 50 wt.% of carbon nanotubes characterized in that the CNT fiber has a resistivity, measured at a temperature of 20°C, of less than 50 $\mu\Omega$*cm.

In an embodiment, the solution-spun carbon nanotubes (CNT) fiber consists of at least 50 wt.% of carbon nanotubes characterized in that the CNT fiber has a resistivity, measured at a temperature of 20°C, of less than 120 $\mu\Omega$*cm.

In an embodiment, the solution-spun carbon nanotubes (CNT) fiber consists of at least 50 wt.% of carbon nanotubes characterized in that the CNT fiber has a modulus of at least 150 GPa.

In an embodiment, the carbon nanotubes (CNT) fiber consists of at least 50 wt.% of carbon nanotubes characterized in that the CNT fiber has a thermal conductivity of at least 100 W/mK, more preferably at least 200 W/mK, even more preferably at least 500 W/mK, mostpreferably at least 1000 W/mK,

For a person skilled in the art it is clear that a batch of carbon nanotubes will have a distribution in diameter, length and chirality. Carbon nanotubes as used in the invention are to be understood to mean any type of carbon nanotubes, such as single wall carbon nanotubes (SWNT), double wall carbon nanotubes (DWNT) or multiwall carbon nanotubes (MWNT) and mixtures thereof, having an average length at least 10 times its average outer diameter, preferably at least 100 times its outer diameter, most preferably at least 1000 times its outer diameter. The carbon nanotubes may be open ended carbon nanotubes or closed carbon nanotubes.

Preferably, the carbon nanotubes fiber consists for at least 50 wt.% of carbon nanotubes, more preferably at least 75 wt.%, even more preferably at least 90 wt.%, most preferably at least 95 wt.% of carbon nanotubes.

The term carbon nanotubes fiber as used in this invention is to be understood to include the final product and any intermediate of the spun carbon nanotubes. For example, it encompasses the liquid stream of spin-dope spun out of the spinning hole(s) of the spinneret, the partly and fully coagulated fibers as present in the coagulation medium, the drawn fibers, and it encompasses also the stripped, neutralized, washed and/or heat treated final fiber product. The term fiber is to be understood to include filaments, yarns, ribbons and tapes. A fiber may have any desired length ranging from a millimeter to virtually endless. Preferably, the fiber has a length of at least 10 cm, more preferably at least 1 m, more preferably at least 10 m, most preferably at least 1000 m.

Carbon nanotubes fibers having low resistivity have a high electrical conductivity. Conductivity is to be understood to mean the inverse of the resistivity. Carbon nanotubes fibers according to the invention may also exhibit a high thermal conductivity.

The process according to the present invention comprises the steps of supplying a spin-dope comprising carbon nanotubes (CNT) to a spinneret, extruding the spin-dope through at least one spinning hole in the spinneret to form spun CNT fiber(s), coagulating the spun CNT fiber(s) in a coagulation medium to form coagulated CNT fibers wherein the fiber(s) are drawn at a draw ratio of at least 1.0 and wherein the carbon nanotubes have an average length of at least 0.5 $\mu$m.

Preferably, the carbon nanotubes have an average length of at least 1 $\mu$m, more preferably at least 2 $\mu$m, even more preferably at least 5 $\mu$m, even more preferably at least 15 $\mu$m, even more preferably at least 20 $\mu$m, most preferably at least 100 $\mu$m.

When the carbon nanotubes have an average length of at least 0.5 $\mu$m, CNT fibers can be prepared having low resistivity and/or high modulus. However, nanotubes having a length in the range of 10 to 15 $\mu$m are potentially hazardous for humans (particularly in case no precautionary measures have been taken) and therefore nanotubes having a length of at least 15 $\mu$m are especially preferred.

Without being bound to theory, it is believed that the quality of a CNT fiber having low resistivity is determined by the quality of the carbon nanotubes and the length of the carbon nanotube ropes in the CNT fibers.

A carbon nanotube rope is to be understood to mean an elongated assembly of predominantly parallel carbon nanotubes, 30 to 200 nm in diameter.

The length of the nanotubes ropes in the CNT fibers should preferably be in the range of 1 $\mu$m to 5 mm. It is believed that the length of the nanotubes ropes in the CNT fibers is influenced by the concentration of carbon nanotubes in the spin-dope, by the average length of the carbon nanotubes, by the size of the spinning holes, by the viscosity of the spin-dope and/or by the draw ratio applied to the spun CNT fibers.

Preferably, the carbon nanotubes have a high quality as defined by the G/D ratio. The high quality is a prerequisite for nanotubes dissolution, which is required for making spin-dopes. Nanotubes can be dissolved in strong acids if the G/D ratio is above 4. Without being bound to any theory, it is believed that using carbon nanotubes having a G/D ratio higher than 4 decreases the resistivity of resulting CNT fibers. For the present invention the G/D ratio is preferably higher than 10. The G/D ratio of the carbon nanotubes is determined using Raman spectroscopy at a wavelength of 514 nm.

The carbon nanotubes may contain up to about 30 wt.% impurities, such as for example amorphous carbon and catalyst residues.

The spin-dope may comprise metallic carbon nanotubes and/or semi-conducting carbon nanotubes.

The spin-dope can be formed by dissolving carbon nanotubes in a suitable solvent, preferably a super acid, most preferably chlorosulfonic acid. Additionally, the spin-dope may comprise polymers, coagulants, surfactants, salts, nanoparticles, dyes or materials that can improve conductivity. Preferably, the carbon nanotubes are purified and/or dried before dissolving the carbon nanotubes in the solvent.

The spin-dope preferably comprises 0.2 wt.% to 25 wt.% carbon nanotubes, based on the total weight of the spin-dope, preferably 0.5 wt.% to 20 wt.%, more preferably 1 wt.% to 15 wt.%.

In an embodiment the spin-dope comprises 1 wt% to 6 wt% carbon nanotubes, most preferably 2 wt.% to 6 wt.%. These relatively low concentrations of carbon nanotubes in the spin-dope enable that the resulting CNT fiber has lower resistivity and/or a higher modulus. These relatively low concentrations of carbon nanotubes in the spin-dope are especially advantageous to obtain low resistivity in the resulting CNT fiber in combination with high modulus and/or high tensile strength of the CNT fiber.

The spin-dope comprising carbon nanotubes is supplied to a spinneret and extruded through at least one spinning hole to obtain spun CNT fiber(s). The spinneret may contain any number of spinning holes, ranging from one spinning hole to manufacture CNT monofilament up to several thousands to produce multifilament CNT yarns.

In an embodiment of the process to obtain CNT fibers having low resistivity the spinning hole(s) in the spinneret are circular and have a diameter in the range of 10 to 1000 $\mu$m, more preferably in the range of 25 to 500 $\mu$m, even more preferably in the range of 40 to 250 $\mu$m.

In an alternative embodiment, the spinning holes may have a non-circular cross section, such as for example rectangular, having a major dimension defining the largest distance between two opposing sides of the cross section and a minor dimension defining smallest distance between two opposing sides of the cross section. The minor dimension of the non-circular cross section is preferably in the range of 10 to 1000 $\mu$m, more preferably in the range of 25 to 500 $\mu$m, even more preferably in the range of 40 to 250 $\mu$m.

The entrance opening of the spinning hole(s) may be tapered.

The extruded CNT fiber(s), also called spun CNT fiber(s), may be spun directly into the coagulation medium, or guided into the coagulation medium via an air gap. The coagulation medium may be contained in a coagulation bath, or may be supplied in a coagulation curtain. The coagulation medium in the coagulation bath may be stagnant or there may be a flow of coagulation medium inside or through the coagulation bath.

The spun CNT fibers may enter the coagulation medium directly to coagulate the CNT fibers to increase the strength of the CNT fibers to ensure that the CNT fibers are strong enough to support their own weight. The speed of the CNT fiber(s) in the coagulation medium is in general established by the speed of a speed-driven godet or winder after the CNT fibers have been coagulated and optionally neutralized and/or washed.

In an air gap the spun CNT fiber(s) can be drawn to increase the orientation in the CNT fiber(s) and the air gap avoids direct contact between spinneret and coagulation medium. The speed of the CNT fiber(s) and thus the draw ratio in the air gap is in general established by the speed of a speed-driven godet or winder after the CNT fibers have been coagulated and optionally neutralized and/or washed.

Preferably, the extruded fibers directly enter into the coagulation medium.

The coagulation speed of CNT fibers may be influenced by flow of the coagulation medium. In the processes according to the invention the coagulation medium may flow in the same direction as the CNT fibers. The flow velocity of coagulation medium can be selected to be lower, equal to or higher than the speed of the CNT fibers.

The extruded CNT fibers may be spun horizontally, vertically or even under an angle to the vertical direction.

In an embodiment, the extruded CNT fibers are spun horizontally. Horizontal spinning can for example be advantageous to keep the coagulation bath shallow. Carbon nanotubes fibers may be retrieved relatively easy from the shallow coagulation bath at start up of the process or when breakage of the CNT fiber occurs.

The extruded CNT fibers may be spun directly into the coagulation bath in a horizontal direction. The extruded CNT fibers are only limitedly influenced by gravity forces and are supported by the liquid coagulation medium and will therefore not break up into smaller pieces under their own weight.

In an embodiment the extruded CNT fibers are spun directly into a coagulation bath in the shape of a tube wherein coagulation medium may flow in the same direction as the CNT fibers. The flow velocity of the coagulation medium is determined by the fluid flow supplied to the tube and the diameter of the transport tube and can be set to any desired value relative to the speed of the CNT fibers.

Alternatively, the tube may be submerged in coagulation medium inside a larger coagulation bath. Without CNT fibers, the flow velocity of the coagulation medium inside the tube is determined by the height difference between the liquid level of the coagulation bath and the outlet of the transport tube.

The extruded CNT fibers may be spun vertically through an air gap before entering a coagulation bath containing coagulation medium or may be spun vertically directly in a coagulation bath containing coagulation medium.

Alternatively, the extruded CNT fibers may be spun vertically into a curtain of coagulation medium, with or without air-gap. The curtain of coagulation medium can easily be formed by using an overflow system.

The extruded CNT fibers may be spun directly into the coagulation medium vertically upward or under an angle between the horizontal and the vertically upward direction, i.e. in a direction against gravity. Extruding CNT fibers in a direction against gravity is especially preferred when the density of the spun CNT fibers is lower than the density of the coagulation medium. At start-up of the process the extruded CNT fibers will float towards the top end of the coagulation bath where the CNT fibers can be picked up from the surface.

The coagulation bath containing the coagulation medium may be in the shape of a tube wherein coagulation medium may flow from the bottom to the top of the tube. The flow velocity of the coagulation medium is determined by the fluid flow supplied to the tube and the diameter of the transport tube and can be set to any desired value relative to the speed of the CNT fibers.

Suitable coagulation media are for example sulphuric acid, PEG-200, dichloromethane, trichloromethane, tetrachloromethane, ether, water, alcohols, such as methanol, ethanol and propanol, acetone, N-methyl pyrrolidone (NMP), dimethylsulfoxide (DMSO), sulfolane. The coagulant can contain dissolved material such as surfactant or polymer such as polyvinylalcohol (PVA). It is also possible to add agents to the coagulation medium that can be entrapped in the fiber to enhance its properties, such as but not limited to polymers, surfactants, salts, nanoparticles, dyes and materials that can improve conductivity such as iodine. Preferably, the coagulation medium is water or acetone.

To obtain CNT fiber having low resistivity and/or high modulus, drawing has to be applied to the spun CNT fiber at a draw ratio of at least 0.8, preferably at least 1.0, more preferably at least 1.1, more preferably at least 1.2, more preferably at least 2, even more preferably at least 5, most preferably at least 10.

Although the spun CNT fiber may be drawn at a draw ratio well above a draw ratio of 2, such as for example at a draw ratio of at least 5 or at least 10, it has been found that increasing the draw ratio to a ratio higher than 2 does not result in lower resistivity in the resulting CNT fiber.

A high draw ratio can be used to tune the diameter of the resulting fibers.

Drawing of the spun CNT fiber(s) may be applied in a one-step process, wherein the spin-dope is extruded through the spinning hole(s), the spun CNT fiber(s) are drawn and optionally coagulated, stripped, neutralized and/or washed, and wound in one continuous process.

Alternatively, drawn CNT fibers can be prepared in two-step process. In the first processing step the spin-dope is extruded through the spinning hole(s), the spun CNT fiber(s) are optionally coagulated, stripped, neutralized and/or washed, and wound. Subsequently, the spun and optionally coagulated, stripped, neutralized and/or washed CNT fibers are unwound and drawn in a separate drawing process.

Drawing of the CNT fibers may preferably be executed in a liquid swelling medium, which causes swelling of the CNT fibers. It is believed that swelling of the CNT fibers decreases bonding between neighboring carbon nanotubes in the CNT fiber, which enables improved alignment of carbon nanotubes during drawing of the CNT fibers. In the second processing step the fibers can also optionally be coagulated, stripped, neutralized and/or washed before being wound.

Suitable swelling media are for example strong acids, such as chlorosulfonic acid, oleum, sulfuric acid, triflic acid, mixtures thereof and dilution thereof. Preferably, the swelling medium is sulfuric acid.

In a one-step process, the draw ratio is to be understood to mean the ratio of the winding speed of the CNT fiber(s) over the superficial velocity of the spin-dope in the spinning hole(s). The superficial velocity can be calculated as the volume of spin-dope extruded through the spinning hole(s) divided by the cross sectional area of the spinning hole(s). In the alternative that the CNT is drawn in a separate processing step in a two-step process, the draw ratio is to be understood to mean the ratio of the winding speed of the CNT fiber(s) after drawing over the unwinding speed.

The combination of carbon nanotubes having a G/D ratio of at least 4, preferably at least 10, an average carbon nanotubes length of at least 0.5 $\mu$m, and a draw ratio of at least 0.8, preferably at least 1.0, applied to the spun CNT fiber is especially advantageously in obtaining CNT fibers having low resistivity and/or high modulus.

In a preferred embodiment the minor dimension of the cross section, or the diameter for a circular cross section, of the spinning hole(s) is selected to be relatively large in order to obtain a relatively low superficial velocity of the spin-dope in the spinning hole. It is believed that a relatively low superficial velocity of the spin-dope in the spinning hole(s) enables that the extruded spin-dope can be drawn at a higher draw ratio, preferably at a draw ratio of at least 0.8, more preferably at least 1.0, even more preferably at least 2.0.

The combination of a low superficial velocity of the spin-dope in the spinning hole and a low concentration of carbon nanotubes in the spin-dope, preferably in the range of 1 wt% to 6 wt% carbon nanotubes, most preferably in the range of 2 wt.% to 6 wt.%, is especially advantageously in obtaining CNT fibers having low resistivity and/or high modulus. The low superficial velocity of the spin-dope in the spinning hole and relatively low concentration of carbon nanotubes in the spin-dope are especially advantageous to obtain low resistivity in the resulting CNT fiber in combination with high modulus and/or high tensile strength of the CNT fiber.

The carbon nanotubes may have an average length of at least 0.5 $\mu$m. Preferably, the carbon nanotubes have an average length of at least 1 $\mu$m, more preferably at least 2 $\mu$m, even more preferably at least 5 $\mu$m, even more preferably at least 15 $\mu$m, even more preferably at least 20 $\mu$m, most preferably at least 100 $\mu$m. It is believed that a higher average length of the carbon nanotubes enables that the concentration of carbon nanotubes in the spin-dope may be reduced, preferably to a concentration in the range of 1 wt.% to 6 wt.%, more preferably in the range of 2 wt.% to 6 wt.%

To obtain low resistivity CNT fiber it is advantageous that the spin-dope comprising carbon nanotubes has been mixed thoroughly to obtain a homogeneous spin-dope. Preferably, the spin-dope is obtained by mixing carbon nanotubes with a solvent, preferably a super-acid, to dissolve the carbon nanotubes in the solvent.

Dissolving carbon nanotubes in a solvent means that each single carbon nanotube is fully surrounded by the solvent or that the carbon nanotubes are present in conglomerates of two, three or more carbon nanotubes, up to about 50 nanotubes, whereby the conglomerates are fully surrounded by the solvent and the carbon nanotubes in the conglomerates are adjacent or partly adjacent to one another without solvent being present between the adjacent carbon nanotubes.

Preferably, the carbon nanotubes are mixed with a super-acid, preferably chlorosulfonic acid.

Preferably, the spin-dope comprising carbon nanotubes passes through one or more filters before being supplied to the spinning hole(s) to further improve the quality of the spin-dope.

To obtain CNT fiber having low resistivity and/or high modulus it is further advantageous that the spin-dope comprises double wall carbon nanotubes (DWNT) having a length of at least 0.5 $\mu$m, preferably at least 1 $\mu$m, more preferably at least 2 $\mu$m, even more preferably at least 5 $\mu$m, even more preferably at least 15 $\mu$m, even more preferably at least 20 $\mu$m, most preferably at least 100 $\mu$m.

In another preferred embodiment the spin-dope comprises single wall carbon nanotubes (SWNT) having a length of at least 0.5 $\mu$m, preferably at least 1 $\mu$m, more preferably at least 2 $\mu$m, even more preferably at least 5 $\mu$m, even more preferably at least 20 $\mu$m, most preferably at least 100 $\mu$m.

In yet another preferred embodiment the spin-dope comprises mixtures of carbon nanotubes with different amounts of walls, having a length of at least 0.5 $\mu$m, preferably at least 1 $\mu$m, more preferably at least 2 $\mu$m, even more preferably at least 5 $\mu$m, even more preferably at least 20 $\mu$m, most preferably at least 100 $\mu$m.

The spun and coagulated CNT fiber can be collected on a winder. The inventive process makes it possible to manufacture CNT fibers at industrial winding speeds. The winding speed preferably is at least 0.1 m/min, more preferably 1 m/min, even more preferably at least 5 m/min, even more preferably at least 50 m/min, most preferably at least 100 m/min.

Preferably, the superficial velocity of the spin-dope in the spinning hole is selected such that a draw ratio of at least 0.8, more preferably at least 1.0, even more preferably at least 2.0 can be obtained.

The spun and coagulated CNT fiber can optionally be neutralized and/or washed, preferably with water, and subsequently dried.

The winder may be located inside the coagulation bath to wash the coagulated CNT fiber while being wound on a bobbin, which is especially useful when the coagulation medium used to coagulate the spun fiber(s) is also suitable to wash the CNT fibers, for example when the coagulation medium is water. The winder may be submersed fully or only partially in the coagulation medium. Preferably, the bobbin collecting the CNT fiber(s) is submersed only partially in the coagulation medium.

Drying can be performed by any known drying technique, such as for example hot air drying, infra red heating, vacuum drying, etc.

After drying, resistivity may be further improved by doping the fiber with substances such as but not limited to iodine, potassium, acids or salts.

Carbon nanotubes (CNT) fiber according to the invention have a resistivity, measured at a temperature of 20°C, less than 120 $\mu\Omega$*cm. Preferably, the CNT fiber has a resistivity less than 100 $\mu\Omega$*cm, more preferably less than 50 $\mu\Omega$*cm, even more preferably less than 20 $\mu\Omega$*cm, most preferably less than 10 $\mu\Omega$*cm.

The wet spinning process according to the invention enables manufacturing of CNT fibers having resistivity below 120 $\mu\Omega$*cm, lower than state-of-the art wet spinning processes. In a preferred embodiment, the resistivity of the CNT fibers is below 50 $\mu\Omega$*cm, which is lower than reported for nanotube fibers from any known production process. At the same time, the CNT fibers can have high modulus.

Resistivity has been determined using a 2 point probe method. A fiber is glued to a microscope glass slide with silver paste at three positions. The resistance between points 1 and 2, points 2 and 3 and points 1 and 3 is measured at room temperature. This resistance is plotted vs. the length between the silver paste spots. The slope of the resistance vs. length is multiplied by the surface area of the fiber to obtain the resistivity.

The CNT fiber preferably has a specific electrical conductivity at 20°C higher than $0.6*10^4$ S*$cm^2$/g, preferably higher than $2*10^4$ S*$cm^2$/g, more preferably higher than $1.3*10^5$ S*$cm^2$/g. The specific conductivity is calculated as the conductivity divided by the density of the CNT fiber. Electrical conductivity is the reciprocal value of resistivity.

The density of the CNT fiber is determined by dividing the weight of a piece of filament by its volume. The density of the CNT fiber may be in the range of 0.3 to 2.2 g/$cm^3$. Preferably the density of the CNT fiber is as low as possible.

Carbon nanotubes (CNT) fibers according to the invention may have a thermal conductivity at a temperature of 20°C of at least 1 W/mK, Preferably, the CNT fiber has a thermal conductivity of at least 10 W/mK, more preferably at least 100 W/mK, more preferably at least 200 W/mK, even more preferably at least 500 W/mK, most preferably at least 1000 W/mK.

Thermal conductivity $\kappa$ has been determined using a 3-omega method. Four silver epoxy contacts were placed in a row on a sapphire substrate. A 1 cm long fiber was laid across the four contacts and evacuated to ~1x10-5 Torr in a Variable Temperature Micro Probe System (VTMP) produced by MMR Technology. Lead wires were connected to the contacts and AC current was applied to the fiber at a frequency of w for temperatures ranging from 170 to 330 K. Voltage is detected with the lock-in amplifier technique. The applied current causes Joule heating in the fiber which leads to a resistance fluctuation at a frequency of $2\omega$, corresponding to a voltage $V_{3\omega}$ at $3\omega$ that in the low frequency limit is related to thermal conductivity, $\kappa$, for a long, slender wire:

$$V_{3\omega} \approx \frac{4I^3 LRR'}{\pi^4 \kappa S \sqrt{1+(2\omega\gamma)^2}}$$

where I, L, R, R' and S are electric current, sample length, electrical resistance, electrical resistance derivative with temperature, and fiber cross section, respectively. To accurately extract the thermal diffusivity $\gamma$, V3w is measured for at least 6 frequencies ranging from 0.5 Hz to 1 kHz at each temperature, and $\gamma$ is calculated by fitting the V3$\omega$ equation to the experimental V3w versus frequency data.

In a preferred embodiment, the diameter of the CNT fiber preferably is less than 50 $\mu$m. Preferably, the CNT fiber has a diameter in the range of 1 to 50 $\mu$m, more preferably in the range of 2 to 40 $\mu$m, most preferably in the range of 15 to 35 $\mu$m.

Carbon nanotubes (CNT) fibers according to the invention may have a high current-carrying capacity of at least 2000 A/$cm^2$, preferably at least 10000 A/$cm^2$, more preferably at least 20000 A/$cm^2$, most preferably at least 30000 A/$cm^2$, preferably for a CNT fiber 25 $\mu$m in diameter.

The current carrying capacity is defined here as a maximum current density at which fiber on a glass substrate shows a constant resistance during the experiment. The method for measuring resistance is described earlier. From temperature dependent resistivity measurements executed in dedicated set-up we know that CNT fibers spun from super acid show around room temperature metallic characteristics, i.e. the resistance increases with increasing temperature. Therefore, increasing the current density will increase the electrically generated heat and at certain threshold value of the current density the fiber temperature will start to increase. Below the threshold value the temperature of the fiber does not increase. One can easily observe the temperature increase in the fiber when the fiber resistance increases. If the temperature increase in the fiber, caused by an increase in electrical resistance, does not stabilize then at certain temperature the fiber breaks explosively. Determination of the current carrying capacity is based on finding the maximum current at which the fiber resistance at ambient temperature does not increase. That maximum current carrying capacity is related to fiber diameter.

For a fiber of 12.5 $\mu$m diameter the current carrying capacity is at least 3000 A/cm$^2$, preferably at least 50000 A/cm$^2$, more preferably at least 100000 A/cm$^2$ and most preferably at least 500000 A/cm$^2$. For a fiber of 50 $\mu$m diameter the current carrying capacity is at least 500 A/cm$^2$, preferably at least 5000 A/cm$^2$, more preferably at least 10000 A/cm$^2$ and most preferably at least 20000 A/cm$^2$.

In an embodiment, the CNT fiber comprises up to 25 wt.% of a charge carrier donating material(s). It is believed that the charge carrier donating material(s) in the CNT fiber may further reduce the resistivity of the CNT fiber.

The charge carrier donating material may be comprised within the individual carbon nanotubes, in particular when the CNT fiber comprises open ended carbon nanotubes, and/or the a charge carrier donating material may be comprised in between the individual carbon nanotubes, in particular when the CNT fiber comprises closed carbon nanotubes.

The charge carrier donating material may comprise for example, but not limited to, an acid, preferably a super acid, salts, such as for example $CaCl_2$, bromide containing substances and/or iodine.

In another embodiment, the CNT fiber has a modulus of at least 120 GPa, more preferably at least 150 GPa, most preferably at least 200 GPa.

In a preferred embodiment, the CNT fiber has a tensile strength of at least 0.3 GPa, preferably at least 0.8 GPa, more preferably at least 1.0 GPa, most preferable at least 1.5 GPa.

Tensile strength has been determined on samples of 20 mm length by measuring breaking force at 3 mm/s extension rate and dividing the force by the average surface area of the filament. Modulus has been determined by taking the highest slope in the force vs. elongation curve, and divide the value by average surface area.

Fiber surface area is determined from the average diameter. Both light microscopy and scanning electron microscopy (SEM) were used for determining the cross-sectional surface areas of the CNT fibers. To determine the surface areas from SEM measurements (FEI Quanta 400 ESEM FEG), fiber diameters were measured at a magnification of ~1x10$^4$ for a minimum of 10 segments of a 20 mm length of fiber.

For light microscopy measurements (transmitted light; Olympus BH60; 550 nm filter), samples were prepared by taping fibers onto a piece of cardboard. The fibers on the cardboard were then embedded in Epoheat resin. After curing, the samples were cut perpendicular to the fiber axis and polished. The polished surface was imaged with the light microscope and SISpro Five image analysis software was used to measure the cross-sectional areas of the embedded fibers.

Table 1 shows specific electrical conductivity, specific strength and specific thermal conductivity for high performance materials.

Table 1.

| Fiber material type | Specific electrical conductivity (kS m$^2$/kg) | Specific strength (mN/Tex) | Specific thermal conductivity (mW m$^2$/kg K) |
|---|---|---|---|
| Aluminum alloy | 12.3 | 268 | 79.3 |
| Copper | 6.59 | 37.3 | 44.6 |
| Gold | 2.35 | 6.21 | 15.6 |
| Magnesium | 12.5 | 118 | 91.4 |
| Nickel | 1.76 | 35.7 | 6.84 |
| Silver | 6.15 | 13.3 | 39.9 |
| Steel | 1.64 | 267 | 3.33 |
| Cytec Thornel® graphite fiber (pitch-based) | 0.413 | 1410 | 500 |
| Cytec Thornel® T-650/35 carbon fiber (PAN-based) | 0.0377 | 2420 | 7.91 |
| TohoTenax Besfight MC Type I | 0.494 | 1230 | 5.19 |

(continued)

| Fiber material type | Specific electrical conductivity (kS m²/kg) | Specific strength (mN/Tex) | Specific thermal conductivity (mW m²/kg K) |
|---|---|---|---|
| TohoTenax Besfight MC Type II | 0.840 | 909 | 4.12 |
| Twisted MWNT fibers | 0.0900 | N/A | 66.7 |
| Twisted MWNT fibers | 0.0397 | 575 | 32.5 |
| Twisted MWNT fibers | 0.141 | 1710 | N/A |
| Collapsed DWNTs fibers | 0.301 | 750 | N/A |
| Collapsed DWNTs fibers | 0.0588 | 1800 | 40.0 |
| Acid spun 0.5 μm SWNT fiber | 0.455 | 109 | 18.2 |
| CNT fiber according to the present invention | 4.18 | 969 | 451 |

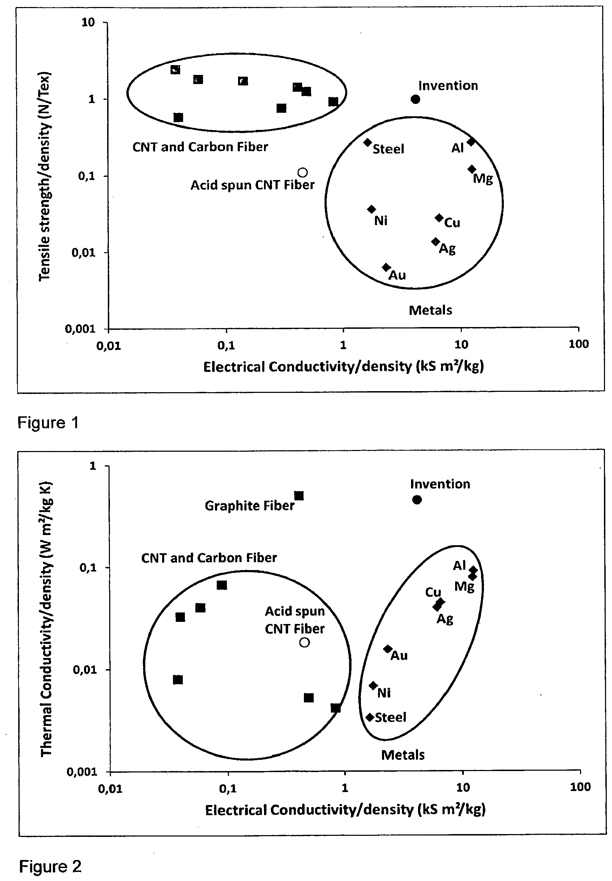

Figure 1 shows that the CNT fibers according to the invention have higher specific electrical conductivity than prior art CNT fibers and carbon fibers, while having higher specific thermal conductivity than metal fibers.

Figure 2 shows that the CNT fibers according to the invention have a unique combination of high specific tensile strength and high specific electrical conductivity.

Examples

Example 1

A CNT fiber was prepared by thoroughly mixing 1 g of predominantly double wall carbon nanotubes having an average length of 3 μm and a G/D ratio of 17 with 10 ml chlorosulfonic acid to obtain a spin-dope comprising 6 wt.% carbon nanotubes. The spin-dope was extruded through a spinneret comprising a single spinning hole having a diameter of 65 μm. The extruded CNT fiber entered into a coagulation bath comprising water. The CNT fiber was collected on a winder at a winding speed of 13 m/min and an extrusion speed of 10 m/min, giving an effective draw ratio of 1.3. In a subsequent processing step the fiber was washed with water and dried in an oven at 110°C for 120 minutes.
The resistivity of the CNT fiber was 43 +/- 4 μΩ*cm, the diameter of the fiber was 16 +/- 0.2 μm, the tensile strength was 0.58 +/- 0.07 GPa (highest 0.62 GPa) and the modulus was 146 +/- 27 GPa (highest 169 GPa).

Example 2

A CNT fiber was prepared as in example 1, but the extrusion rate was 11 m/min, giving an effective draw ratio of 1.1.
The resistivity of the CNT fiber was 44 +/- 2 μΩ*cm, the diameter of the fiber was 19.6 +/- 2.7 μm, the tensile strength was 0.38 +/- 0.08 GPa (highest 0.47 GPa) and the modulus was 80 +/- 26 GPa (highest 130 GPa).

Example 3

A CNT fiber was prepared by thoroughly mixing 0.5 g of predominantly double wall carbon nanotubes having an average length of 3 μm and a G/D ratio of 17 with 10 ml chlorosulfonic acid to obtain a spin-dope comprising 3 wt.% carbon nanotubes. The spin-dope was extruded through a spinneret comprising a single spinning hole having a diameter of 65 μm. The extruded CNT fiber entered into a coagulation bath comprising DMSO/PVA. The CNT fiber was collected on a winder at a winding speed of 8.8 m/min and an extrusion speed of 1.8 m/min, giving an effective draw ratio of 4.9. In a subsequent processing step the fiber was washed with water and dried in an oven at 110°C for 120 minutes.
The resistivity of the CNT fiber was 46 μΩ*cm, the tensile strength was 0.25 GPa and the modulus was 47 GPa.

Example 4

A CNT fiber was prepared by thoroughly mixing 0.54 g of predominantly double wall carbon nanotubes having an average length of 7 μm and a G/D ratio of 27 with 10 ml chlorosulfonic acid to obtain a spin-dope comprising 3 wt.%

carbon nanotubes. The spin-dope was extruded through a spinneret comprising a single spinning hole having a diameter of 65 $\mu$m. The extruded CNT fiber entered into a coagulation bath comprising acetone. The CNT fiber was collected on a winder at a winding speed of 4 m/min and an extrusion speed of 2 m/min, giving an effective draw ratio of 2. In a subsequent processing step the fiber was washed with water and dried in an oven at 110°C for 120 minutes.

The resistivity of the CNT fiber was 53 +/- 7 $\mu\Omega$*cm, the diameter of the fiber was 8.2 +/- 0.2 $\mu$m, the tensile strength was 1.15 +/- 0.08 GPa (highest 1.27 GPa), the modulus was 145 +/- 20 GPa (highest 167 GPa) and thermal conductivity was 200 W/m.K

Example 5

The fiber of example 4 was doped in a sealed vacuum oven (0.2 Atmosphere) with solid iodine. The sample was kept in the oven at 200 °C for 24 hours. Doping was performed under tension by attaching weights (10% of breaking force) to the ends of fibers which were attached to a metal wire with Graphi-Bond 551-RN Aremco (a graphite adhesive suitable for high temperature applications). After 24 hours, the fibers were removed from the oven, allowed to cool, and then washed with ethanol to remove any excess iodine from their surfaces.

Resistivity improved to 22 +/- 4 $\mu\Omega$*cm, Thermal conductivity improved to 635W/m.K.

Example 6

A CNT fiber was prepared by thoroughly mixing 2.16 g of predominantly double wall carbon nanotubes having an average length of 7 $\mu$m and a G/D ratio of 27 with 10 ml chlorosulfonic acid to obtain a spin-dope comprising 11 wt.% carbon nanotubes. The spin-dope was extruded through a spinneret comprising a single spinning hole having a diameter of 65 $\mu$m. The extruded CNT fiber entered into a coagulation bath comprising acetone. The CNT fiber was collected on a winder at a winding speed of 7 m/min and an extrusion speed of 2 m/min, giving an effective draw ratio of 3.5. In a subsequent processing step the fiber was washed with water and dried in an oven at 110°C for 120 minutes.

The resistivity of the CNT fiber was 59 $\mu\Omega$*cm, the diameter of the fiber was 17.6 +/- 1.4 $\mu$m, the tensile strength was 0.49 GPa, the modulus was 102 +/- 17 GPa.

Example 7

A CNT fiber was prepared by thoroughly mixing 0.32 g of predominantly double wall carbon nanotubes having an average length of 14 $\mu$m and a G/D ratio of 48 with 10 ml chlorosulfonic acid to obtain a spin-dope comprising 1.8 wt.% carbon nanotubes. The spin-dope was extruded through a spinneret comprising a single spinning hole having a diameter of 65 $\mu$m. The extruded CNT fiber entered into a coagulation bath comprising acetone. The CNT fiber was collected on a winder at a winding speed of 4 m/min and an extrusion speed of 2 m/min, giving an effective draw ratio of 2. In a subsequent processing step the fiber was washed with water and dried in an oven at 110°C for 120 minutes.

The resistivity of the CNT fiber was 63 $\mu\Omega$*cm, the diameter of the fiber was 10.2 +/- 1.4 $\mu$m, the tensile strength was 1.01+/- 0.02 GPa, the modulus was 155 +/- 17 GPa.

Comparative example 1

A CNT fiber was prepared as in example 1, but the extrusion rate was 9 m/min, giving an effective draw ratio of 0.9.

The resistivity of the CNT fiber was 460 +/- 31 $\mu\Omega$*cm, the diameter of the fiber was 25 +/- 2 $\mu$m, the tensile strength was 0.05 +/- 0.01 GPa and the modulus was 12.5 +/- 5 GPa.

**Claims**

1. A carbon nanotubes (CNT) fiber consisting of at least 50 wt.% of carbon nanotubes **characterized in that** the CNT fiber has a resistivity, measured at a temperature of 20°C, of less than 50 $\mu\Omega$*cm.

2. A solution-spun carbon nanotubes (CNT) fiber consisting of at least 50 wt.% of carbon nanotubes **characterized in that** the CNT fiber has a resistivity, measured at a temperature of 20°C, of less than 120 $\mu\Omega$*cm.

3. The solution-spun CNT fiber according to claim 2 **characterized in that** the CNT fiber has a resistivity less than 100 $\mu\Omega$*cm, preferably less than 50 $\mu\Omega$*cm.

4. The CNT fiber according to any of the preceding claims **characterized in that** the CNT fiber has a resistivity of less

than 20 μΩ*cm, preferably less than 10 μΩ*cm.

5. A solution-spun carbon nanotubes (CNT) fiber consisting of at least 50 wt.% of carbon nanotubes **characterized in that** the CNT fiber has a modulus of at least 150 GPa.

6. The CNT fiber according to claim 5 **characterized in that** the CNT fiber has a modulus of at least 200 GPa.

7. The CNT fiber according to any of the preceding claims **characterized in that** the CNT fiber comprises ropes having a length of 1 μm to 5 mm.

8. A carbon nanotubes (CNT) fiber consisting of at least 50 wt.% of carbon nanotubes **characterized in that** the CNT fiber has a thermal conductivity of at least 100 W/mK, more preferably at least 200 W/mK, even more preferably at least 500 W/mK, most preferably at least 1000 W/mK.

9. The CNT fiber according to any of the preceding claims **characterized in that** the CNT fiber comprises up to 25 wt.% of a charge carrier donating material.

10. The CNT fiber according to any of the preceding claims **characterized in that** the diameter of the CNT fiber is in the range of 1 to 50 μm.

11. The CNT fiber according to any of the preceding claims **characterized in that** the CNT fiber has a tensile strength of at least 0.3 GPa, preferably at least 0.8 GPa, more preferably at least 1.0 GPa, most preferably at least 1.5 GPa.

12. A composite article comprising carbon nanotubes fibers according to any of the preceding claims.

13. A process for manufacturing carbon nanotubes (CNT) fibers consisting of at least 50 wt.% of carbon nanotubes comprising the steps of supplying a spin-dope comprising carbon nanotubes to a spinneret, extruding the spin-dope through at least one spinning hole in the spinneret to form spun CNT fiber(s), coagulating the spun CNT fiber(s) in a coagulation medium to form coagulated CNT fibers **characterized in that** the CNT fiber(s) is/are drawn at a draw ratio of at least 1.0 and wherein the carbon nanotubes have a length of at least 0.5 μm.

14. The process for manufacturing carbon nanotubes fiber according to claim 13 **characterized in that** the carbon nanotubes have a length of at least 1 μm, preferably at least 2 μm, more preferably at least 5 μm, even more preferably at least 15 μm, even more preferably at least 20 μm, most preferably at least 100 μm.

15. The process for manufacturing carbon nanotubes fiber according to any of claims 13 to 15 **characterized in that** the carbon nanotubes have a G/D ratio of at least 4, preferably at least 10.

16. The process for manufacturing carbon nanotubes fiber according to any of claims 13 to 15 **characterized in that** the winding speed of the CNT fiber is at least 0.1 m/min, preferably at least 1 m/min, more preferably at least 5 m/min, even more preferably at least 50 m/min, most preferably at least 100 m/min.

17. The process for manufacturing carbon nanotubes fiber according to any of claims 13 to 16 **characterized in that** the spinning hole(s) in the spinneret has/have a diameter or a minor dimension in the range of 10 to 1000 μm, preferably in the range of 25 to 500 μm, most preferably in the range of 40 to 250 μm.

18. The process for manufacturing carbon nanotubes fiber according to any of claims 13 to 17 **characterized in that** the CNT fiber(s) is/are drawn in a separate drawing process.

**Patentansprüche**

1. Kohlenstoffnanoröhren(CNT)-Faser, bestehend aus mindestens 50 Gew.-% Kohlenstoffnanoröhren, **dadurch gekennzeichnet, dass** die CNT-Faser einen bei einer Temperatur von 20 °C gemessenen spezifischen Widerstand von weniger als 50 μΩ*cm aufweist.

2. Aus Lösung gesponnene Kohlenstoffnanoröhren(CNT)-Faser, bestehend aus mindestens 50 Gew.-% Kohlenstoffnanoröhren, **dadurch gekennzeichnet, dass** die CNT-Faser einen bei einer Temperatur von 20 °C gemessenen spezifischen Widerstand von weniger als 120 μΩ*cm aufweist.

3. Aus Lösung gesponnene CNT-Faser nach Anspruch 2, **dadurch gekennzeichnet, dass** die CNT-Faser einen spezifischen Widerstand von weniger als 100 μΩ*cm, vorzugsweise von weniger als 50 μΩ*cm aufweist.

4. CNT-Faser nach einem der vorhergehenden Ansprüche, **dadurch gekennzeichnet, dass** die CNT-Faser einen spezifischen Widerstand von weniger als 20 μΩ*cm, vorzugsweise von weniger als 10 μΩ*cm aufweist.

5. Aus Lösung gesponnene Kohlenstoffnanoröhren(CNT)-Faser, bestehend aus mindestens 50 Gew.-% Kohlenstoffnanoröhren, **dadurch gekennzeichnet, dass** die CNT-Faser ein Modul von mindestens 150 GPa aufweist.

6. CNT-Faser nach Anspruch 5, **dadurch gekennzeichnet, dass** die CNT-Faser ein Modul von mindestens 200 GPa aufweist.

7. CNT-Faser nach einem der vorhergehenden Ansprüche, **dadurch gekennzeichnet, dass** die CNT-Faser Stränge mit einer Länge von 1 μm bis 5 mm umfasst.

8. Kohlenstoffnanoröhren(CNT)-Faser, bestehend aus mindestens 50 Gew.-% Kohlenstoffnanoröhren, **dadurch gekennzeichnet, dass** die CNT-Faser eine Wärmeleitfähigkeit von mindestens 100 W/mK, bevorzugt mindestens 200 W/mK, bevorzugter mindestens 500 W/mK und am meisten bevorzugt mindestens 1000 W/mK aufweist.

9. CNT-Faser nach einem der vorhergehenden Ansprüche, **dadurch gekennzeichnet, dass** die CNT-Faser bis zu 25 Gew.-% eines Ladungsträger abgebenden Materials umfasst.

10. CNT-Faser nach einem der vorhergehenden Ansprüche, **dadurch gekennzeichnet, dass** der Durchmesser der CNT-Faser im Bereich von 1 bis 50 μm liegt.

11. CNT-Faser nach einem der vorhergehenden Ansprüche, **dadurch gekennzeichnet, dass** die CNT-Faser eine Zugfestigkeit von mindestens 0,3 GPa, bevorzugt mindestens 0,8 GPa, bevorzugter mindestens 1,0 GPa und am meisten bevorzugt mindestens 1,5 GPa aufweist.

12. Verbundwerkstoffartikel, umfassend Kohlenstoffnanoröhrenfasern nach einem der vorhergehenden Ansprüche.

13. Verfahren zur Herstellung von Kohlenstoffnanoröhren(CNT)-Fasern, bestehend aus mindestens 50 Gew.-% Kohlenstoffnanoröhren, umfassend die Schritte des Zuführens einer Kohlenstoffnanoröhren enthaltenden Spinnlösung zu einer Spinndüse, des Extrudierens der Spinnlösung durch mindestens ein Spinnloch in der Spinndüse, um gesponnene CNT-Faser(n) zu bilden, des Koagulierens der gesponnenen CNT-Faser(n) in einem Koagulationsmedium, um koagulierte CNT-Fasern zu bilden, **dadurch gekennzeichnet, dass** die CNT-Faser(n) mit einem Streckverhältnis von mindestens 1,0 gestreckt wird/werden und wobei die Kohlenstoffnanoröhren eine Länge von mindestens 0,5 μm aufweisen.

14. Verfahren zur Herstellung von Kohlenstoffnanoröhrenfasern nach Anspruch 13, **dadurch gekennzeichnet, dass** die Kohlenstoffnanoröhren eine Länge von mindestens 1 μm, bevorzugt mindestens 2 μm, bevorzugter mindestens 5 μm, noch bevorzugter mindestens 15 μm, noch bevorzugter mindestens 20 μm und am meisten bevorzugt mindestens 100 μm aufweisen.

15. Verfahren zur Herstellung von Kohlenstoffnanoröhrenfasern nach einem der Ansprüche 13 bis 15, **dadurch gekennzeichnet, dass** die Kohlenstoffnanoröhren ein G/D-Verhältnis von mindestens 4, bevorzugt mindestens 10 aufweisen.

16. Verfahren zur Herstellung von Kohlenstoffnanoröhrenfasern nach einem der Ansprüche 13 bis 15, **dadurch gekennzeichnet, dass** die Wickelgeschwindigkeit der CNT-Faser mindestens 0,1 m/min, bevorzugt mindestens 1 m/min, bevorzugter mindestens 5 m/min, noch bevorzugter mindestens 50 m/min und am meisten bevorzugt mindestens 100 m/min beträgt.

17. Verfahren zur Herstellung von Kohlenstoffnanoröhrenfasern nach einem der Ansprüche 13 bis 16, **dadurch gekennzeichnet, dass** das Spinnloch/die Spinnlöcher in der Spinndüse einen Durchmesser oder eine kleinere Abmessung im Bereich von 10 bis 1000 μm, bevorzugt im Bereich von 25 bis 500 μm und am meisten bevorzugt im Bereich von 40 bis 250 $\mu$m aufweist/aufweisen.

**18.** Verfahren zur Herstellung von Kohlenstoffnanoröhrenfasern nach einem der Ansprüche 13 bis 17, **dadurch gekennzeichnet, dass** die CNT-Faser(n) in einem separaten Streckprozess gestreckt wird/werden.

**Revendications**

**1.** Fibre de NTC (nanotubes de carbone), constituée d'au moins 50 % en poids de nanotubes de carbone, **caractérisée en ce que** la fibre de NTC présente une résistivité, mesurée à la température de 20 °C, de moins de 50 $\mu\Omega$*cm.

**2.** Fibre de NTC (nanotubes de carbone) produite par filage à partir d'une solution, constituée d'au moins 50 % en poids de nanotubes de carbone, **caractérisée en ce que** la fibre de NTC présente une résistivité, mesurée à la température de 20 °C, de moins de 120 $\mu\Omega$*cm.

**3.** Fibre de NTC produite par filage à partir d'une solution, conforme à la revendication 2, **caractérisée en ce que** la fibre de NTC présente une résistivité de moins de 100 $\mu\Omega$*cm, et de préférence, de moins de 50 $\mu\Omega$*cm.

**4.** Fibre de NTC conforme à l'une des revendications précédentes, **caractérisée en ce que** la fibre de NTC présente une résistivité de moins de 20 $\mu\Omega$*cm, et de préférence, de moins de 10 $\mu\Omega$*cm.

**5.** Fibre de NTC (nanotubes de carbone) produite par filage à partir d'une solution, constituée d'au moins 50 % en poids de nanotubes de carbone, **caractérisée en ce que** la fibre de NTC présente un module d'au moins 150 GPa.

**6.** Fibre de NTC conforme à la revendication 5, **caractérisée en ce que** la fibre de NTC présente un module d'au moins 200 GPa.

**7.** Fibre de NTC conforme à l'une des revendications précédentes, **caractérisée en ce que** la fibre de NTC comprend des torons longs de 1 $\mu$m à 5 mm.

**8.** Fibre de NTC (nanotubes de carbone), constituée d'au moins 50 % en poids de nanotubes de carbone, **caractérisée en ce que** la fibre de NTC présente une conductivité thermique d'au moins 100 W/m.K, de préférence d'au moins 200 W/m.K, et mieux encore d'au moins 500 W/m.K, et au mieux d'au moins 1000 W/m.K.

**9.** Fibre de NTC conforme à l'une des revendications précédentes, **caractérisée en ce que** la fibre de NTC comprend jusqu'à 25 % en poids d'un matériau donnant des porteurs de charge.

**10.** Fibre de NTC conforme à l'une des revendications précédentes, **caractérisée en ce que** le diamètre de la fibre de NTC se situe dans la gamme de 1 à 50 $\mu$m.

**11.** Fibre de NTC conforme à l'une des revendications précédentes, **caractérisée en ce que** la fibre de NTC présente une résistance à la traction d'au moins 0,3 GPa, de préférence d'au moins 0,8 GPa, et mieux encore d'au moins 1,0 GPa, et au mieux d'au moins 1,5 GPa.

**12.** Article composite comprenant des fibres de nanotubes de carbone conformes à l'une des revendications précédentes.

**13.** Procédé de fabrication de fibres de NTC (nanotubes de carbone), constituées d'au moins 50 % en poids de nanotubes de carbone, comportant les étapes suivantes :

- amener à une filière une masse à filer comprenant des nanotubes de carbone,
- extruder cette masse à filer en la faisant passer à travers au moins un orifice de filage de la filière, pour obtenir une fibre ou des fibres de NTC brute(s) de filage,
- et faire coaguler cette fibre ou ces fibres de NTC brute(s) de filage, dans un milieu de coagulation, pour obtenir une fibre ou des fibres de NTC coagulée(s),

**caractérisé en ce que** la fibre ou les fibres de NTC est ou sont étirée(s) à un rapport d'étirage d'au moins 1,0, et dans lequel les nanotubes de carbone sont longs d'au moins 0,5 $\mu$m.

**14.** Procédé de fabrication de fibres de nanotubes de carbone, conforme à la revendication 13, **caractérisé en ce que** les nanotubes de carbone sont longs d'au moins 1 μm, de préférence d'au moins 2 μm, mieux encore d'au moins 5 μm, encore mieux d'au moins 15 μm, toujours mieux d'au moins 20 μm, et au mieux d'au moins 100 μm.

**15.** Procédé de fabrication de fibres de nanotubes de carbone, conforme à l'une des revendications 13 à 15, **caractérisé en ce que** les nanotubes de carbone présentent un rapport G/D d'au moins 4, et de préférence d'au moins 10.

**16.** Procédé de fabrication de fibres de nanotubes de carbone, conforme à l'une des revendications 13 à 15, **caractérisé en ce que** la vitesse d'enroulement de la fibre de NTC vaut au moins 0,1 m/min, de préférence au moins 1 m/min, mieux encore au moins 5 m/min, encore mieux au moins 50 m/min, et au mieux au moins 100 m/min.

**17.** Procédé de fabrication de fibres de nanotubes de carbone, conforme à l'une des revendications 13 à 16, **caractérisé en ce que** l'orifice ou les orifices de filage de la filière présente(nt) un diamètre ou une plus petite dimension situé(e) dans la gamme de 10 à 1000 μm, de préférence dans la gamme de 25 à 500 μm, et au mieux dans la gamme de 40 à 250 μm.

**18.** Procédé de fabrication de fibres de nanotubes de carbone, conforme à l'une des revendications 13 à 17, **caractérisé en ce que** la fibre ou les fibres de NTC est ou sont étirée(s) au cours d'une opération d'étirage séparée.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7125502 B2
- WO 2009058855 A2
- WO 2009058855 A
- WO 03004740 A1

### Non-patent literature cited in the description

- Carbon nanotube-based neat fibers. **BEHABTU N et al.** Nano Today. Elsevier Amsterdam, 01 October 2008, 24-34
- **LARS M. ERICSON et al.** Macroscopic, Neat, Single-Walled Carbon Nanotube Fibers. *Science,* 03 September 2004, vol. 305, 1447-1450